# EUROPÄISCHE PATENTSCHRIFT

(11) **EP 3 648 997 B1**
(45) Veröffentlichungstag und Bekanntmachung des Hinweises auf die Patenterteilung: **15.12.2021**
(21) Anmeldenummer: 18711496.2
(22) Anmeldetag: 05.03.2018
(51) Int. Cl.: B60H 1/00, B60H 1/32, F25B 30/02, F25B 40/00, F25B 41/20

(54) **KÄLTEANLAGE FÜR EIN FAHRZEUG MIT EINEM EINEN WÄRMEÜBERTRAGER AUFWEISENDEN KÄLTEMITTELKREISLAUF SOWIE WÄRMEÜBERTRAGER FÜR EINE SOLCHE KÄLTEANLAGE**
REFRIGERATION SYSTEM FOR A VEHICLE, COMPRISING A REFRIGERANT CIRCUIT HAVING A HEAT EXCHANGER, AND HEAT EXCHANGER FOR SUCH A REFRIGERATION SYSTEM
INSTALLATION FRIGORIFIQUE POUR VÉHICULE POURVUE D'UN CIRCUIT DE RÉFRIGÉRATION ÉQUIPÉ D'UN ÉCHANGEUR THERMIQUE ET ÉCHANGEUR THERMIQUE CONÇU POUR UNE TELLE INSTALLATION FRIGORIFIQUE

(30) Priorität: 03.07.2017 DE 102017211256
(43) Veröffentlichungstag der Anmeldung: 13.05.2020
(73) Patentinhaber: Audi AG, 85045 Ingolstadt (DE)
(72) Erfinder: SCHROEDER, Dirk, 85077 Manching (DE); REBINGER, Christian, 80807 München (DE); ROTTENKOLBER, Helmut, 93349 Mindelstetten (DE)
(86) Internationale Anmeldenummer: PCT/EP2018/055260
(87) Internationale Veröffentlichungsnummer: WO 2019/007558

(56) Entgegenhaltungen:
- EP-A2- 0 855 567
- EP-A2- 1 895 255
- WO-A1-2013/178667
- WO-A2-2012/112802
- DE-A1-102011 118 162
- DE-A1-102013 021 360
- JP-A- 2002 243 296
- US-A1- 2011 056 668

## Beschreibung

Die Erfindung betrifft eine Kälteanlage für ein Fahrzeug mit einem einen zweiflutigen Wärmeübertrager aufweisenden Kältemittelkreislauf gemäß dem Oberbegriff des Patentanspruchs 1. Ferner betrifft die Erfindung einen Wärmeübertrager gemäß dem Oberbegriff des Patentanspruchs 5 für die erfindungsgemäße Kälteanlage.

Aus der EP 1 895 255 A2 ist ein gattungsgemäßer zweiflutiger Wärmeübertrager für eine Kälteanlage mit zwei beabstandeten und parallel zueinander angeordneten Sammelrohren bekannt, zwischen welchen sich mehrere Wärmeübertrager(-flach)rohre erstrecken und eine Fluidverbindung mit den Sammelrohren herstellen. Im ersten Sammelrohr ist ein Trennelement angeordnet, welches den Hohlraum des Sammelrohres in eine erste und eine zweite Kammer und damit die Wärmeübertragerrohre in eine erste und eine zweite Flut teilen. An dem ersten Sammelrohr ist für die erste und zweite Flut jeweils ein Kältemittelanschluss vorgesehen, ein weiterer Kältemittelanschluss ist an dem zweiten Sammelrohr angeordnet. Mittels einer Steuervorrichtung wird der Wärmeübertrager zwischen einem Verdampfer-Modus für einen Wärmepumpenbetrieb und einem Kondensator-/ Gaskühler-Modus für einen Kälteanlagenbetrieb umgeschaltet, indem die Kältemittelanschlüsse derart geöffnet oder geschlossen werden, dass das Kältemittel im Verdampfer-Modus einflutig und im Kondensator-/Gaskühler-Modus zweiflutig durch alle Wärmeübertragerrohre zirkuliert.

Ferner beschreibt die US 2011/0056668 A1 eine Kälteanlage mit aus mehreren Wärmeübertragerelementen aufgebauten modularen Wärmeübertrage. Bei einem solchen modularen Wärmeübertrager mit zwei Wärmeübertragerelementen werden zur Realisierung einer Kondensatorfunktion die beiden Wärmeübertragerelemente in Reihe miteinander fluidverbunden und zur Realisierung einer Verdampferfunktion parallel miteinander fluidverbunden. Zur Realisierung dieser unterschiedlichen Verschaltungszustände sind entsprechende Ventilorgane vorgesehen.

Eine stationäre Kälteanlage für ein Gebäude ist aus der WO 2012/112802 A2 mit einem einen zweiflutigen Außen-Wärmeübertrager aufweisenden Kältemittelkreislauf bekannt. Dieser zweiflutige Außen-Wärmeübertrager wird als Kältemittelkondensator für den AC-Betrieb zweiflutig und in einem Wärmepumpen-Betrieb einflutig durchströmt. Der Außen-Wärmeübertrager weist ein erstes und zweites Sammelrohr auf, die über Wärmeübertragerrohre verbunden sind. Das erste Sammelrohr weist ein Trennelement zur Unterteilung der Wärmeübertragerrohre in eine erste und zweite Flut auf, wobei das erste Sammelrohr für die erste und zweite Flut jeweils einen Kältemittelanschluss aufweist. Im AC-Betrieb strömt das Kältemittel über den einen Kältemittelanschluss in die erste Flut, wird anschließend im zweiten Sammelrohr in die zweite Flut umgelenkt und strömt in umgekehrter Richtung über den anderen Kältemittelanschluss aus dem Außen-Wärmeübertrager. Für den Wärmepumpen-Betrieb weist das zweite Sammelrohr einen dritten Kältemittelanschluss auf, aus welchem bei einflutiger Durchströmung das Kältemittel aus dem Außen-Wärmeübertrager abgeführt wird. Das Kältemittel wird im Wärmepumpen-Betrieb über die beiden Kältemittelanschlüsse des ersten Sammelrohres zugeführt, die über ein unidirektionales Ventilorgan derart verbunden sind, dass nur Kältemittel im einflutigen Wärmepumpen-Betrieb in beide Kältemittelanschlüsse des ersten Sammelrohres strömen kann, jedoch nicht im zweiflutigen AC-Betrieb.

Als Flut werden die in gleicher Richtung und parallel zueinander von Teilmassenströmen des Kältemittels durchströmten Wärmeübertragerrohre bezeichnet, deren Anzahl durch die Lage eines in einem Sammelrohr angeordneten Trennelementes oder mehrerer solcher Trennelemente bestimmt wird bzw. werden.

Eine Kälteanlage mit einem mehrflutigen Wärmeübertrager für einen kombinierten Betrieb im AC-Betrieb oder Wärmepumpen-Betrieb ist aus der DE 10 2012 110 702 A1 bekannt. Bei diesem mehrflutigen Wärmeübertrager sind die Trennmittel in den Sammelrohren schaltbar ausgebildet, so dass das Kältemittel je nach Strömungsrichtung und Betriebsmodus durch eine unterschiedliche Anzahl von Fluten ableitbar ist. Im AC-Betrieb ist die Strömungsrichtung des Kältemittels entgegengesetzt zur Strömungsrichtung des Kältemittels im Wärmepumpen-Betrieb.

Ferner ist aus der DE 20 2012 012 516 U1 ein Heiz-/Kühl-Modul mit einem einen Verdichter, einen Gaskühler, ein Expansionsorgan und einen Verdampfer umfassenden Kältemittelkreislauf bekannt, bei welchem der Gaskühler als ein erster, von einem Kühlmittel durchströmten Flüssigkeits-Wärmeübertrager und der Verdampfer als ein zweiter, von einem Kühlmittel durchströmten Flüssigkeits-Wärmeübertrager abgebildet wird. Der Verdichter, der Gaskühler und damit der erste Flüssigkeits-Wärmeübertrager sind zusammen in thermischem Kontakt miteinander angeordnet, weiterhin sind das Expansionsorgan, der Verdampfer und damit der zweite Flüssigkeits-Wärmeübertrager zusammen in thermischem Kontakt miteinander angeordnet, und schließlich sind der Verdichter, der Gaskühler und damit der erste Flüssigkeits-Wärmeübertrager einerseits und das Expansionsorgan, der Verdampfer und damit der zweite Flüssigkeits-Wärmeübertrager andererseits durch einen thermischen Isolationsbereich voneinander getrennt angeordnet. Bei diesem bekannten Heiz-/Kühl-Modul sind die warmen Komponenten baulich zusammengefasst als auch die kalten Komponenten, wodurch eine Wärmeverluste vermeidende und den Wirkungsgrad erhöhende günstige thermische Aufteilung erzielt werden soll. Dieses Heiz-/Kühl-Modul kann auch als Wärmepumpe eingesetzt werden.

Der erste Flüssigkeits-Wärmeübertrager dieses gemäß der DE 20 2012 012 516 U1 bekannten Heiz-/Kühl-Moduls ist gegenüber Druckverlusten im Verdampfer unsensibel, da es kühlmittelseitig nicht zu Vereisungen und damit einer Versiegelung von Oberflächen des Wärmeübertragers kommen kann. Aufgrund der indirekten Prozessführung bei diesem Heiz-/Kühl-Modul besteht zwischen dem Kältekreis und der Umgebung kein Kontakt, dieser wird erst über die Flüssigkeit als Trägermedium hergestellt.

Weiterhin beschreibt die DE 10 2012 109 038 A1 eine Vorrichtung für einen Kältemittelkreislauf mit einem Wärmeübertrager zur Wärmeübertragung zwischen dem Kältemittel und der Luft. Der Wärmeübertrager ist mit einem Ventil und einem Sammler als ein kompaktes, zusammenhängendes Modul mit integrierten Kältemittelverbindungen ausgebildet. Das Ventil ist innerhalb des Sammlers oder innerhalb des Wärmeübertragers integriert angeordnet und als Verbindungselement zwischen dem Sammler und dem Wärmeübertrager ausgebildet. Eine solche Vorrichtung ist für den Einsatz in einem Kältemittelkreislauf einer Klimaanlage zur Konditionierung der Luft eines Fahrgastraumes eines Kraftfahrzeuges vorgesehen.

Weiterhin ist in der DE 11 2015 005 449 T5 eine Fahrzeugklimaanlageneinrichtung beschrieben, die in der Lage ist, eine Klimatisierung eines Fahrzeuginnenraums auch in einem Fall, in dem ein Fehler in einem Magnetventil auftritt, fortzusetzen, um eine Strömung eines Kältemittels in jeder Betriebsart zu ändern. Diese Fahrzeugklimaanlageneinrichtung enthält ein Magnetventil zum Kühlen, ein Magnetventil zum Heizen und ein Magnetventil zum Entfeuchten, um jeweilige Betriebsarten der Fahrzeugklimaanlageneinrichtung umzuschalten. Eine Steuerungseinrichtung wechselt und führt die jeweiligen Betriebsarten einer Heiz-Betriebsart, einer Entfeuchtungs-Betriebsart und einer Kühl-Betriebsart aus. Die Steuerungseinrichtung hat eine vorbestimmte Fehler-Klimatisierungsbetriebsart und ein Fehlererfassungsmittel zum Erfassen eines Fehlers des Magnetventils. In einem Fall, in welchem das Fehlererfassungsmittel erfasst, dass die Magnetventile in den jeweiligen Betriebsarten ausfallen, wählt die Steuerungseinrichtung die Fehler-Klimatisierungsbetriebsart aus, in der eine Fahrzeuginnenraumklimatisierung durch die Betriebsrat erreichbar ist, um die Klimatisierung des Fahrzeuginnenraums fortzusetzen. Bei dieser bekannten Fahrzeugklimaanlageneinrichtung wird ein Kondensator mit integriertem Modulator/Hochdrucksammler sowie einer Subcoolstrecke verwendet, die jeweils für den AC-Betrieb aktiv und für den Wärmepumpen-Betrieb inaktiv geschaltet werden. Eine Nutzung des Kondensatorgitters zur Kältemittelverdampfung wird damit ausschließlich auf die Kondensationsstrecke reduziert. Nicht die gesamte Netzfläche des Kondensators wird folglich für den Luft-Wärmepumpen-Prozess herangezogen. Rückschlagventile und Absperrventile werden zur Umsetzung der Sektionierung herangezogen.

Die JP 2002 243296 A beschreibt einen Kältemittelkreislauf mit einem dreiflutigen Außen-Wärmeübertrager und einem dreiflutigen Innen-Wärmeübertrager. Jeder Flut dieser dreiflutigen Wärmeübertrager ist beidseitig derselben jeweils ein Kältemittelanschluss vorgesehen. Hierbei sind jeweils an einem Ende eines Wärmeübertragers von den drei Kältemittelanschlüssen zwei Kältemittelanschlüssen über ein unidirektionales Ventilorgan zusammengeführt, welches mit dem dritten Kältemittelanschluss verbunden ist.

Aus der EP 0 855 567 A2 ist ein als Wärmepumpenverdampfer und als Kondensator eingesetzter Wärmetauscher bekannt, welcher ein erstes und zweites Sammelrohr aufweist, die durch parallel verlaufende Wärmeübertragerrohre verbunden sind.

Die DE 10 2011 118 162 A1 beschreibt eine kombinierte Kälteanlage und Wärmepumpe, aufweisend einen Primärstrang mit einem Verdichter, einem Wärmeübertrager als Kälteanlagenkondensator oder Wärmepumpenverdampfer, einem Kältemittelsammler, einem inneren Wärmeübertrager mit einer Hochdruckpassage und einer Niederdruckpassage für das Kältemittel, einem Expansionsorgan und einem Verdampfer sowie aufweisend einen Sekundärstrang mit einem Heizkondensator mit einem Expansionsorgan, wobei ein absperrbarer Bypass zur Durchströmung der Hochdruckpassage des inneren Wärmeübertragers zwischen dem Hochdruckausgang des inneren Wärmeübertragers und dem Wärmeübertrager angeordnet ist.

Ein Kältemittelkreislauf gemäß der WO 2013/178667 A1 umfasst einen Kältemittelverdichter, einen äußeren Wärmetauscher und einen Verdampfer. Ferner ist ein Kühlmittelkreislauf mit einem mit dem Kältemittelkreislauf thermisch gekoppelten Kältemittel-Kühlmittel-Wärmetauscher und einem in einem Klimagerät angeordneten Heizregister vorgesehen.

Gemäß der DE 10 2013 021 360 A1 wird ein Thermomanagementsystem eines Kraftfahrzeuges mit einem Kältemittelkreislauf, welcher einen Primärkreislauf mit einem elektrischen Verdichter, einem ersten Wärmeübertrager zur Wärmeübertragung zwischen einem Kältemittel und der Umgebung, einem ersten Expansionsorgan sowie einem sich anschließenden zweiten Wärmeübertrager zur Wärmeübertragung zwischen dem Kältemittel und einer zu konditionierenden Zuluft eines Fahrzeuginnenraums und einem zweiten Expansionsorgan sowie einem parallel zum zweiten Wärmeübertrager angeordneten dritten Wärmeübertrager zur Wärmeübertragung zwischen dem Kältemittel und einem zu konditionierenden Kühlmittel für eine Fahrzeugbatterie geschaffen, wobei der Kältemittelkreislauf für einen reinen Kühlmodus der Fahrzeugbatterie oder für einen mit dem Kühlmodus der Fahrzeugbatterie kombinierten Kühlmodus und/oder Heizmodus und/oder Nachheizmodus für die zu konditionierende Zuluft des Fahrzeuginnenraums ausgebildet ist. Mit diesem Thermomanagementsystem wird eine effiziente, aktive Batteriekühlung und ein Wärmepumpenprozess zur Heizung des Innenraums bzw. der Batterie ermöglicht, deren primäre Führungsgröße eine geforderte Abkühltemperaturdifferenz des Kühlmediums Wasser-Glykol ist. Im reinen Kühlmodus der Fahrzeugbatterie wird gezielt eine Kältemittelgüte, welche einem Dampfgehalt entspricht, am Austritt des dritten Wärmeübertragers über eine Stellung des zweiten Expansionsorgans nahe an der Taulinie des verwendeten Kältemittels bei minimaler Leistungsaufnahme des Verdichters eingestellt. Hierzu ist zumindest das zweite Expansionsorgan als elektronisch regelbares Expansionsventil ausgeführt, welches von einer Auswerte- und Steuereinheit angesteuert wird. Bei der reinen Batteriekühlung (Single-Chiller-Mode) mit der Kältemittelgüte am Austritt des dritten Wärmeübertragers nahe an der Taulinie resultiert ein Niederdruckniveau auf höchster Stufe bei generell minimalem Druckverhältnis und bei bester Effizienz und geringster Leistungsaufnahme des elektrischen Verdichters, welcher mit seiner vorgegebenen Drehzahl die Niederdrucklage einstellt.

Es ist Aufgabe der Erfindung eine Kälteanlage für ein Fahrzeug mit einem einen Wärmeübertrager aufweisenden Kältemittelkreislauf anzugeben, mit welcher sowohl in einem AC-Betrieb als auch in einem Wärmepumpen-Betrieb eine optimale Durchströmung zur Sicherstellung der besten Leistungsfähigkeit ermöglicht wird. Ferner soll der Wärmepumpen-Betrieb druckverlustoptimiert durchführbar sein.

Ferner ist es Aufgabe der Erfindung einen Wärmeübertrager für die Kälteanlage anzugeben.

Die erstgenannte Aufgabe wird gelöst durch eine Kälteanlage mit den Merkmalen des Patentanspruchs 1.

Eine solche Kälteanlage für ein Fahrzeug mit einem einen zweiflutigen Wärmeübertrager aufweisenden Kältemittelkreislauf, bei welcher
- der zweiflutige Wärmeübertrager als Kältemittelkondensator oder Gaskühler für einen AC-Betrieb oder als Luftwärmepumpenverdampfer für einen Wärmepumpen-Betrieb betreibbar ist,
- eine erste Flut des Wärmeübertragers einen ersten Kältemittelanschluss und eine zweite Flut des Wärmeübertragers einen zweiten Kältemittelanschluss aufweist, wobei für die zweiflutige Durchströmung des Wärmeübertragers im AC-Betrieb der erste Kältemittelanschluss ein Kältemitteleinlass und der zweite Kältemittelanschluss ein Kältemittelauslass ist,
- zur einflutigen Durchströmung des Wärmeübertragers im WärmepumpenBetrieb der erste und zweite Kältemittelanschluss ein Kältemitteleinlass ist, und
- der Wärmeübertrager wenigstens einen dritten Kältemittelanschluss aufweist, welcher als Kältemittelauslass im Wärmepumpenbetrieb mit der ersten Flut kältemittelausgangsseitig und der zweiten Flut kältemittelausgangsseitig fluidverbunden ist,
zeichnet sich erfindungsgemäß dadurch aus,
- zur Steuerung der Strömung des Kältemittels vom zweiten Kältemittelanschluss zum ersten Kältemittelanschluss ein unidirektionales Ventilorgan den zweiten Kältemittelanschluss mit dem ersten Kältemittelanschluss fluidverbindet,
- der dritte Kältemittelanschluss mit einem Ventilorgan zur Steuerung des aus dem Wärmeübertrager austretenden Kältemittels fluidverbunden ist,
- der Wärmeübertrager einen vierten Kältemittelanschluss aufweist, welcher als zweiter Kältemittelauslass im Wärmepumpenbetrieb neben dem dritten Kältemittelanschluss als erster Kältemittelauslass mit der ersten Flut kältemittelausgangsseitig und der zweiten Flut kältemittelausgangsseitig fluidverbunden ist, und
- der dritte und vierte Kältemittelanschluss mit dem Ventilorgan zur Steuerung des aus dem Wärmeübertrager zu austretenden Kältemittels fluidverbunden ist.

Eine solche erfindungsgemäße Kälteanlage kann im Wärmepumpenbetrieb mit geringstem Druckverlust betrieben werden, wodurch das Vereisungsrisiko minimiert wird. Außerdem wird eine homogene Temperaturverteilung über die gesamte Fläche des Wärmeübertragers im Wärmepumpenbetrieb erreicht. Damit besteht einerseits die Möglichkeit, dass das Niederdruckniveau angehoben werden kann und hierdurch die Systemeffizienz gesteigert wird und andererseits der umgesetzte Kältemittel-Massenstrom gesteigert werden kann, da das System, insbesondere jedoch der Kältemittelverdichter erst zu einem späteren Zeitpunkt abgeregt werden muss.

Mit wenigstens zwei Kältemittelauslässen wird für den Wärmepumpenbetrieb des Wärmeübertragers, insbesondere für den Luftwärmepumpenbetrieb eine weitere Optimierung der Durchströmung des Wärmeübertragers erreicht, da das Kältemittel im Luftwärmepumpenbetrieb gleichmäßiger über die beiden Kältemittelauslässe abfließen kann. Dieser Effekt kann noch durch die Realisierung weiterer Kältemittelauslässe verstärkt werden, so dass der Wärmeübertrager mehr als zwei, also bspw. drei oder vier solcher Kältemittelauslässe aufweisen würde.

Die Kälteanlage kann im AC-Betrieb mit hoher Leistungsfähigkeit betrieben werden, wenn weiterbildungsgemäß der Wärmeübertrager zur Bildung der ersten und zweiten Flut asymmetrisch aufgeteilt ist. Auch eine symmetrische Aufteilung kann realisiert werden.

In vorteilhafter Weise ist nach einer Weiterbildung der Erfindung das unidirektionale Ventilorgan als Rückschlagventil ausgebildet. In bevorzugter Weise ist weiterbildungsgemäß das mit dem dritten Kältemittelanschluss verbundene Ventilorgan als Abschaltventil ausgebildet.

Die zweitgenannte Aufgabe wird gelöst durch einen Wärmeübertrager mit den Merkmalen des Patentanspruchs 5.

Ein solcher Wärmeübertrager für eine erfindungsgemäße Kälteanlage umfasst:
- ein erstes Sammelrohr und ein zweites Sammelrohr, welche beabstandet zueinander ausgerichtet sind,
- Wärmeübertragerrohre zur Herstellung einer Fluidverbindung zwischen den Sammelrohren,
- ein in dem ersten Sammelrohr angeordnetes Trennelement zur Unterteilung der Wärmeübertragerrohre in eine erste und eine zweite Flut, wobei das erste Sammelrohr einen ersten Kältemittelanschluss für die erste Flut und einen zweiten Kältemittelanschluss für die zweite Flut aufweist, und
- einen mit dem zweiten Sammelrohr verbundenen dritten Kältemittelanschluss.

Erfindungsgemäß ist wenigstens ein vierter Kältemittelanschluss mit dem zweiten Sammelrohr verbunden.

In der Regel findet im AC-Modus die Einströmung des Kältemittels in die obere Flut und danach die Umlenkung des Kältemittels über das zweite Sammelrohr in die untere zweite Flut statt. Bei asymmetrischer Flachrohraufteilung ist dabei die größere Flachrohranzahl dem Eintrittsabschnitt zugeteilt, die geringere dem Austrittabschnitt.

Für den Wärmepumpenmodus würde dies eine Einströmung in die untere Flut und Umlenkung sowie eine Ausströmung aus der oberen Flut bedeuten.

Vorzugsweise ist ein Sammlerblock derart in den Wärmeübertrager integriert, dass dieser im Bereich des zweiten Sammelrohres angeordnet ist. Der Sammlerblock dient der Zusammenführung des dritten und vierten Kältemittelanschlusses. Sind mehr als zwei solcher Kältemittelanschlüsse vorgesehen, werden diese ebenfalls von einem solchen Sammlerblock zusammengeführt.

Üblicherweise kann der Sammlerblock als vom Wärmeübertrager separates Bauteil realisiert werden.

Nach einer letzten bevorzugten Weiterbildung der Erfindung ist das unidirektionale

Ventilorgan im Wärmeübertrager integriert, über welches der erste Kältemittelanschluss mit dem zweiten Kältemittelanschluss derart verbunden ist, dass eine Kältemittelströmung in Richtung des zweiten Kältemittelanschlusses verhindert ist. Dieses Ventilorgan kann in den Wärmeübertrager im Bereich des ersten Sammelrohres integriert werden. Auch hier kann üblicherweise das unidirektionale Ventilorgan als vom Wärmeübertrager separates Bauteil realisiert werden.

Die Erfindung wird nachfolgend anhand von Ausführungsbeispielen unter Bezugnahme auf die beigefügten Figuren ausführlich beschrieben. Es zeigen:
- Figur 1: ein Schaltbild eines Ausführungsbeispieles einer erfindungsgemäßen Kälteanlage mit einem Wärmeübertrager, und
- Figur 2: eine schematische Darstellung eines Ausführungsbeispiels eines erfindungsgemäßen Wärmeübertragers der Kälteanlage nach Figur 1.

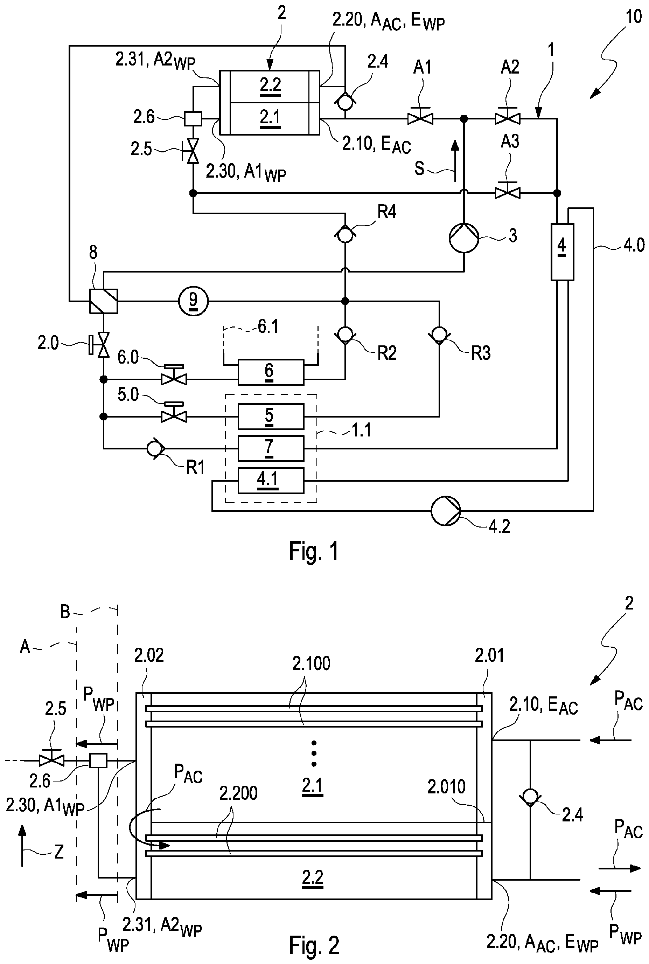

Die in Figur 1 dargestellte Kälteanlage 10 für ein Fahrzeug besteht aus einem Kältemittelkreislauf 1 mit Kohlendioxid (R744) als Kältemittel oder mit einem sonstigen geeigneten Kältemittel. Dieser Kältemittelkreislauf 1 kann sowohl in einem AC-Betrieb als auch in einem Wärmepumpen-Betrieb zur Konditionierung eines in den Fahrzeuginnenraum des Fahrzeugs zu führenden Zuluftstroms betrieben werden.

Dieser Kältemittelkreislauf 1 weist einen zweiflutigen Wärmeübertrager 2 auf, welcher sowohl als Gaskühler bzw. Kondensator für den AC-Betrieb eingesetzt wird als auch im Wärmepumpen-Betrieb die Funktion eines Wärmepumpenverdampfers übernimmt. Der Wärmeübertrager 2 gemäß Figur 1 ist mit einer ersten Flut 2.1 und einer zweiten Flut 2.2 ist mit drei Kältemittelanschlüssen, nämlich einem ersten Kältemittelanschluss 2.10, einem zweiten Kältemittelanschluss 2.20 und einem dritten Kältemittelanschluss 2.30 ausgeführt. Der Wärmeübertrager 2 weist zusätzlich einen vierten Kältemittelanschluss 2.31 auf.

Der erste und zweite Kältemittelanschluss 2.10 und 2.20 sind gemäß Figur 1 mittels eines unidirektionalen Ventilorgans 2.4 verbunden, welches in der einfachsten Form als Rückschlagventil ausgeführt ist, so dass Kältemittel nur vom ersten Kältemittelanschluss 2.10 zum zweiten Kältemittelanschluss 2.20 strömen kann.

Gemäß Figur 1 ist der dritte Kältemittelanschluss 2.30 mit einem als Absperrventil ausgeführten Ventilorgan 2.5 verbunden. Im Detail wird der Aufbau dieses zweiflutigen Wärmeübertragers 2 anhand von Figur 2 erläutert.

Die beiden Kältemittelanschlüsse 2.30 und 2.31 des Wärmeübertragers 2 sind zunächst mit einem Sammlerblock 2.6 zusammengeführt, welcher mit dem als Absperrventil ausgeführten Ventilorgan 2.5 verbunden ist.

Der Kältemittelkreislauf 1 gemäß Figur 1 besteht neben dem Wärmeübertrager 2 aus einem Kältemittelverdichter 3, einem Kältemittel-Kühlmittelwärmeübertrager 4 mit einem kühlmittelseitigen Heizungswärmeübertrager 4.1, einem Verdampfer 5, einem Chiller 6, der kühlmittelseitig mit einer in einem Kühlkreislauf 6.1 angeordneten wärmeerzeugenden elektrischen bzw. elektronischen Komponente, wie bspw. einem elektrischen Energiespeicher thermisch gekoppelt ist, einem inneren Wärmeübertrager 8 und einem Kältemittelsammler 9. Diese aufgeführten Komponenten werden zur Realisierung der unterschiedlichen Betriebsweisen des Kältemittelkreislaufs 1 mit Absperrventilen A1 bis A3 sowie Rückschlagventilen R1 bis R4 verbunden. Jedem als Verdampfer arbeitenden Wärmeübertrager 2, 5 und 6 ist darüber hinaus jeweils ein Expansionsorgan 2.0, 5.0 und 6.0 vorgeschaltet.

Im AC-Betrieb des Kältemittelkreislaufs 1 wird das mittels des Kältemittelverdichters 3 verdichtete Kältemittel in Strömungsrichtung S bei geschlossenem Absperrventil A2 über das offene Absperrventil A1 in den Wärmeübertrager 2, nämlich über dessen ersten Kältemittelanschluss 2.10 geführt. Der Wärmeübertrager 2 wird zweiflutig durchströmt und verlässt den Wärmeübertrager 2 über dessen zweiten Kältemittelanschluss 2.20, wodurch das Kältemittel abkühlt bzw. abkühlt und kondensiert und Kondensationswärme an die Fahrzeugumgebung abgegeben wird. Das als Abschaltventil ausgebildete Ventilorgan 2.5 ist in diesem AC-Betriebsmodus geschlossen. Das Ventilorgan 2.4 ist als Rückschlagventil so gerichtet, dass kein Kältemittel direkt vom ersten Kältemittelanschluss 2.10 zum zweiten Kältemittelanschluss 2.20 strömen kann.

Im AC-Betrieb wird somit der erste Kältemittelanschluss 2.10 als Kältemitteleinlass E_{AC} und der zweite Kältemittelanschluss 2.20 als Kältemittelauslass A_{AC} verwendet, so dass das Kältemittel zuerst über den Kältemitteleinlass E_{AC} in die erste Flut 2.1 und anschließend durch die zweite Flut 2.2 strömt, bevor es über den Kältemittelauslass A_{AC} den Wärmeübertrager 2 wieder verlässt.

Nach Figur 2 ist dieser zweiflutige Wärmeübertrager 2 aus zwei parallelen und beabstandet zueinander angeordneten Sammelrohren, nämlich einem ersten Sammelrohr 2.01 und einem zweiten Sammelrohr 2.02 aufgebaut. Zwischen den beiden Sammelrohren 2.01 und 2.02 stellen Wärmeübertragerrohre 2.100 und 2.200 eine Fluidverbindung her. Die Aufteilung der Wärmeübertragerrohre in eine erste Flut 2.1 und eine zweite Flut 2.2 erfolgt mittels eines in dem ersten Sammelrohr 2.01 angeordneten Trennelementes 2.010. Damit bilden die Wärmeübertragerrohre 2.100 die erste Flut 2.1, welche mit dem ersten Kältemittelanschluss 2.10 verbunden ist, während die Wärmeübertragerrohre 2.200 die zweite Flut 2.2 bilden, die mit dem zweiten Kältemittelanschluss 2.20 verbunden ist.

Damit fließt im AC-Betrieb das Kältemittel entsprechend den Pfeilen P_{AC} über den ersten Kältemittelanschluss 2.10 als Kältemitteleinlass E_{AC} zunächst durch die Wärmeübertragerrohre 2.100 der ersten Flut 2.1 und anschließend über das zweite Sammelrohr 2.02 in entgegengesetzter Richtung durch die Wärmeübertragerrohre 2.200 der zweiten Flut 2.2 zurück in das erste Sammelrohr 2.01 und verlässt den Wärmeübertrager 2 über den zweiten Kältemittelanschluss 2.20 als Kältemittelauslass A_{AC}. In Figur 2 ist der Wärmeübertrager 2 schematisch mit einer asymmetrischen Rohrverteilung dargestellt. Bspw. beträgt die Aufteilung der ersten Flut 2.1 und der zweiten Flut 2.2 2/3 zu 1/3 (oder 60 % zu 40 %) in der Aufteilung der Flächenverhältnisse. Mit einer solchen asymmetrischen Rohrverteilung wird die beste Leistungsfähigkeit im AC-Betrieb erreicht, insbesondere wird hierbei im Wärmepumpenbetrieb über die gesamte Bauteilhöhe in Fahrzeughochrichtung (z-Richtung) eine homogene Kältemittelverteilung in allen Flachrohren der beiden Fluten 2.1 und 2.2 bei minimalem Bauteildruckverlust erreicht.

Nachdem das Kältemittel den Kältemittelauslass A_{AC} des Wärmeübertragers 2 verlassen hat, wird es gemäß Figur 1 über den Hochdruckabschnitt des inneren Wärmeübertragers 8 und das offen gesteuerte Expansionsorgan 2.0 mittels der Expansionsorgane 5.0 und 6.0 in den Verdampfer und den Chiller 6 entspannt, um Wärme aus dem Fahrzeuginnenraum und Abwärme bspw. des Hochvoltspeichers aufzunehmen. Hierbei ist das Rückschlagventil R1 so geschaltet, dass eine Rückströmung in das Heizregister 7 und den Kältemittel-Kühlmittelwärmeübertrager 4 verhindert wird. Das Expansionsorgan 6.0 kann gegebenenfalls auch gesperrt werden. Anschließend wird das Kältemittel über die Rückschlagventile R2 und R3, den Kältemittelsammler 9 sowie der Niederdruckabschnitt des inneren Wärmeübertragers 8 zum Kältemittelverdichter 3 zurückgeführt, wobei über das Rückschlagventil R4 kein Kältemittel strömen kann.

Die beiden Querschnitte der beiden Anschlüsse E_{AC} und A_{AC} können aufgrund von Dichteverhältnissen im Kältemittel so ausgeführt werden, dass der Querschnitt des Kältemitteleinlass E_{AC} > der Querschnitt des Kältemittelauslasses A_{AC} ist. Natürlich können auch gleiche Querschnittsflächen für die beiden Anschlüsse E_{AC} und A_{AC} verwendet werden.

Bei dem Wärmeübertrager 2 gemäß Figur 2 ist der Kältemitteleinlass E_{AC} in Fahrzeughochrichtung (z-Richtung) gesehen oberhalb des Kältemittelauslasses A_{AC} angeordnet. Diese beiden Anschlüsse E_{AC} und A_{AC} können ausgetauscht werden, so dass der Kältemitteleinlass E_{AC} unterhalb des Kältemittelausschlusses A_{AC} liegt. Die Ausrichtung des unidirektionalen Ventilorgans 2.4 ist entsprechend anzupassen.

Im Wärmepumpenbetrieb-Betrieb wird das von dem Kältemittelverdichter 3 verdichtete Kältemittel gemäß Figur 1 in Strömungsrichtung S bei geschlossenem Absperrventil A1 und offenem Absperrventil A2 über den Kältemittel-Wärmeübertrager 4 und das Heizregister 7 mittels des Expansionsorgans 2.0 sowohl in den nachgeschalteten inneren Wärmeübertrager 8 als auch in den Wärmeübertrager 2 entspannt, der nunmehr als Wärmepumpenverdampfer arbeitet, indem das Kältemittel den Wärmeübertrager 2 einflutig durchströmt. Hierzu dienen sowohl der erste als auch der zweite Kältemittelanschluss 2.10 und 2.20 für das Kältemittel als Kältemitteleinlass, während gemäß Figur 1 bei dem Wärmeübertrager 2 neben dem dritten Kältemittelanschluss 2.30 als erster Kältemittelauslass A1_{WP} der vierte Kältemittelanschluss 2.31 als zweiter Kältemittelauslass A2_{WP} für den Wärmepumpenbetrieb vorgesehen ist, wobei der erste und zweite Kältemittelauslass A1_{WP} und A2_{WP} in einem Sammlerblock 2.6 zusammengeführt sind, der seinerseits mit dem als Absperrventil ausgebildeten Ventilorgan 2.5 fluidverbunden ist. Bei diesem Wärmeübertrager 2 gemäß Figur 2 sind die beiden Kältemittelanschlüsse 2.30 und 2.31 in Fahrzeughochrichtung (z-Richtung) übereinander angeordnet, so dass sich der dritte Kältemittelanschluss 2.30 auf der Höhe der zweiten Flut 2.2 und der vierte Kältemittelanschluss 2.31 auf der Höhe der ersten Flut 2.1 liegt. Das aus dem ersten und zweiten Kältemittelauslass A1_{WP} und A2_{WP} strömende Kältemittel wird in dem Sammlerblock 2.6 zusammengeführt und anschließend über das offene Absperrventil/Ventilorgan 2.5, das Rückschlagventil R4, den Kältemittelsammler 9 sowie den Niederdruckabschnitt des inneren Wärmeübertragers 8 zum Kältemittelverdichter 3 zurückgeführt wird. Hierbei verhindern die beiden Rückschlagventile R2 und R3 ein Fluten des Verdampfers 5 und des Chillers 6 mit Kältemittel. Der in Fahrzeughochrichtung oben liegende dritte Kältemittelanschluss 2.30 sowie der in Fahrzeugrichtung unten liegende vierte Kältemittelanschluss 2.31 des Wärmeübertragers 2 gemäß Figur 2 werden nur im Wärmepumpenprozess für austretendes, verdampftes Kältemittel genutzt.

Nach Figur 2 dient also im Wärmepumpen-Betrieb der zweite Kältemittelanschluss 2.20 als Kältemitteleinlass E_{WP}, welcher über das unidirektionale Ventilorgan 2.4, welches als Rückschlagventil ausgeführt ist, mit dem ersten Kältemittelanschluss 2.10 fluidverbunden ist, so dass Kältemittel nur vom zweiten Kältemittelanschluss 2.20 in den ersten Kältemittelanschluss 2.10 und nicht umgekehrt strömen kann. Nachdem das Kältemittel sowohl die erste Flut 2.1 als auch die zweite Flut 2.2 in gleicher Richtung durchströmt hat, wird es im zweiten Sammelrohr 2.02 zusammengeführt und gemäß Figur 2 sowohl über den dritten Kältemittelanschluss 2.30 als ersten Kältemittelauslass A1_{WP} als auch über den vierten Kältemittelanschluss 2.31 als zweiten Kältemittelauslass A2_{WP} über den Sammlerblock 2.6 und anschließend über das geöffnete Ventilorgan 2.5 in den Kältemittelkreislauf 1 zurückgeführt. Der Kältemittelfluss im Wärmepumpenbetrieb-Betrieb ist in Figur 2 schematisch mit den Pfeilen P_{WP} angedeutet.

Der Wärmeübertrager 2 gemäß Figur 2 wird im Wärmepumpen-Betrieb druckverlustoptimiert einflutig durchströmt. Für eine weitere Optimierung des Wärmepumpen-Betriebs ist es lediglich erforderlich, dass der Niederdruckzweig des Kältemittelkreislaufs 1, also die Leitungsabschnitte stromaufwärts des Expansionsorgans 2.0 bis zum niederdruckseitigen Eingang des Kältemittelverdichters 3 hinsichtlich der Leitungs- und Strömungsquerschnitte auf Niederdruckdimension für den AC-Betrieb angepasst sind. Gleiches gilt bei einer Optimierung des Luftwärmepumpenbetriebs für die Leitungsdimensionen stromabwärts vom dritten Kältemittelanschluss 2.30 und vom vierten Kältemittelanschluss 2.31 bis inklusive des Leitungsabschnitts stromabwärts vom Rückschlagventil R4. Die Kältemittelanschlüsse 2.10 und 2.20 des Wärmeübertragers 2 können auf Optimalmaß für den AC-Betrieb ausgelegt werden.

Damit wird erreicht, dass die Kältemittelverteilung über den Wärmeübertrager 2 innerhalb der kältemittelführenden Wärmeübertragerrohre 2.100 und 2.200 gleichmäßig erfolgt.

Bei dem Wärmeübertrager 2 gemäß Figur 2 werden die beiden Kältemittelauslässe A1_{WP} und A2_{WP} zunächst an dem Sammlerblock 2.6 zusammengeführt, bevor das Kältemittel über das Ventilorgan 2.5 in den Kältemittelkreis 1 strömt. Der Sammlerblock 2.6 kann hierbei in den Wärmeübertrager 2 integriert werden, indem dieser im Bereich des zweiten Sammelrohres 2.02 angeordnet wird. Dieser Zustand ist in Figur 2 als Linie A dargestellt, die dann als Teil des Wärmeübertragers 2 die Schnittstelle zur Kältemittelleitung darstellt.

Andererseits ist auch möglich, den Sammlerblock 2.6 als vom Wärmeübertrager 2 separates Bauteil zu realisieren. Dieser Zustand ist in Figur 2 mit einer Linie B dargestellt, wonach zwischen dem Wärmeübertrager 2 und dem Kältemittelkreislauf zwei Schnittstellen vorgesehen sind.

Auch das als Rückschlagventil ausgebildete unidirektionale Ventilorgan 2.4 kann in den Wärmeübertrager 2 gemäß Figur 2 integriert oder als vom Wärmeübertrager 2 separates Bauteil realisiert werden.

Das unidirektionale Ventilorgan 2.4 kann seinerseits auch als von außen ansteuerbares, elektrisches Absperrventil ausgeführt werden.

Zur Reduktion von Druck- und Strömungsverlusten in den Kältmittelkreisläufen 1 gemäß Figur 1 werden folgende Maßnahmen durchgeführt:
- Die Kältemittelleitungen werden möglichst geradlinig und unverwinkelt ausgeführt.

Bei der Ausführung des Wärmeübertragers 2 gemäß Figur 2 sind die Querschnitte der beiden Kältemittelauslässe A1_{WP} und A2_{WP} gleich und ergeben in Summe idealerweise die Querschnittsfläche der zwischen dem Verdampfer 5 und dem Kältemittelverdichter 3 verlaufenden Niederdruckleitung. Bei einer solchen Dimensionierung ist es vorteilhaft eine symmetrische Aufteilung der ersten Flut 2.1 und der zweiten Flut 2.2 zu wählen, d. h eine gleiche Flachrohrverteilung an den beiden Fluten 2.1 und 2.2.

Bei asymmetrischer Aufteilung der ersten (größeren) Flut 2.1 und der zweiten (kleineren) Flut 2.2 ist es auch vorteilhaft, die Verbindungsleitungen der beiden Kältemittelauslässe A1_{WP} und A2_{WP} bis zum Sammlerblock 2.6 in Summe mit einer Querschnittsfläche auszuführen, die mindestens dem Wert der nachfolgenden Sammelleitung entspricht. Dabei sollte jedoch der Leitungsquerschnitt des mit der größeren Flut 2.1 verbundenen Rohres flächenmäßig oberhalb des Wertes des mit der kleineren Flut 2.2 verbunden Rohres bewegen.

Die mittels des Wärmeübertragers 2 aufgenommene Wärme wird gemeinsam mit der vom Kältemittelverdichter 3 ins System eingetragenen Energie zum einen indirekt über den Kältemittel-Kühlmittel-Wärmeübertrager 4, der über einen eine Kühlmittelpumpe 4.2 aufweisenden Heizungskreislauf 4.0 mit dem Heizungswärmeübertrager 4.1 thermisch gekoppelt ist, und direkt mittels des Heizregisters 7 an den in den Fahrzeuginnenraum geführten Zuluftstrom übertragen. Der Verdampfer 5, das Heizregister 7 sowie der Heizungswärmeübertrager 4.1 sind in einem Klimagerät 1.1 der Kälteanlage 10 angeordnet.

Der Leitungsabschnitt mit dem Absperrventil A3 des Kältemittelkreislaufs 1 ist ein Absaugleitungsabschnitt, der den Leitungsabschnitt zwischen dem Absperrventil A2 und dem Kältemittel-Kühlmittelwärmeübertrager 4 mit dem Leitungsabschnitt zwischen dem Ventilorgan 2.5 und dem Rückschlagventil R4 verbindet.

Es sei angemerkt, dass die Anzahl der Anschlüsse an dem Wärmeübertrager (Gaskühler/ Kondensator) 2, der für den Kälteanlagenbetrieb und für den Luftwärmepumpenbetrieb zwei Anschlüsse (Ein-/ Austritt) aufweist, bei Bedarf in beliebiger Anzahl angehoben und angepasst werden kann. Neben der Ausführung mit vier Anschlüssen sind damit auch Anschlüsse in einer Anzahl größer als vier möglich.

Auch ist es möglich nicht nur die Anzahl der Anschlüsse am zweiten Sammelrohr 2.02 des Wärmeübertragers 2, sondern auch an dessen ersten Sammelrohr 2.01 zu vergrößern. So kann sowohl neben dem ersten Kältemittelanschluss 2.10 wenigstens ein weiterer Kältemittelanschluss für die erste Flut 2.1 als auch neben dem zweiten Kältemittelanschluss 2.20 ebenso wenigstens ein weiterer Kältemittelanschluss für die zweite Flut realisiert werden. Die Kältemittelanschlüsse für die erste Flut und die zweite Flut können jeweils in einem Sammlerblock zusammengeführt werden.

### Bezugszeichen

- 1: Kältemittelkreislauf der Kälteanlage 10
- 1.1: Klimagerät

- 2: Wärmeübertrager des Kältemittelkreislaufs 1
- 2.0: Expansionsorgan des Kältemittelkreislaufs 1
- 2.01: erstes Sammelrohr des Wärmeübertragers 2
- 2.010: Trennelement des ersten Sammelrohrs 2.01
- 2.02: zweites Sammelrohr des Wärmeübertragers 2
- 2.1: erste Flut des Wärmeübertragers 2
- 2.10: erster Kältemittelanschluss der ersten Flut 2.1
- 2.100: Wärmeübertragerrohre der ersten Flut 2.1
- 2.2: zweite Flut des Wärmeübertragers 2
- 2.20: zweiter Kältemittelanschluss der zweiten Flut 2.2
- 2.200: Wärmeübertragerrohre der zweiten Flut 2.2
- 2.30: dritter Kältemittelanschluss
- 2.31: vierter Kältemittelanschluss
- 2.4: unidirektionales Ventilorgan
- 2.5: Ventilorgan
- 2.6: Sammlerblock

- 3: Kältemittelverdichter des Kältemittelkreislaufs 1

- 4: Kältemittel-Kühlmittelwärmeübertrager des Kältemittelkreislaufs 1
- 4.0: Heizungskreislauf
- 4.1: Heizungswärmeübertrager des Kältemittelkreislaufs 1
- 4.2: Kühlmittelpumpe

- 5: Verdampfer des Kältemittelkreislaufs 1
- 5.0: Expansionsorgan des Kältemittelkreislaufs 1
- 6: Chiller des Kältemittelkreislaufs 1
- 6.0: Expansionsorgan des Kältemittelkreislaufs 1

- 7: Heizregister des Kältemittelkreislaufs 1

- 8: innerer Wärmeübertrager
- 9: Kältemittelsammler

- 10: Kälteanlage eines Fahrzeugs

- A_{AC}: Kältemittelauslass im AC-Betrieb
- A1_{WP}: Kältemittelauslass im Wärmepumpen-Betrieb
- A2_{WP}: Kältemittelauslass im Wärmepumpen-Betrieb
- E_{AC}: Kältemitteleinlass immer AC-Betrieb
- E_{WP}: Kältemitteleinlass Wärmepumpen-Betrieb

- A1: bis
- A3: Absperrventile
- R1: bis
- R4: Rückschlagventile
- P_{AC}: Pfeil für Kältemittelfluss im AC-Betrieb
- P_{WP}: Pfeil für Kältemittelfluss Wärmepumpen-Betrieb
- S: Strömungsrichtung des Kältemittelkreislaufs 1

## Patentansprüche

1. Kälteanlage (10) für ein Fahrzeug mit einem einen zweiflutigen Wärmeübertrager (2) aufweisenden Kältemittelkreislauf (1), wobei
- der zweiflutige Wärmeübertrager (2) als Kältemittelkondensator oder Gaskühler für einen AC-Betrieb oder als Luftwärmepumpenverdampfer für einen Wärmepumpen-Betrieb betreibbar ist,
- eine erste Flut (2.1) des Wärmeübertragers (2) einen ersten Kältemittelanschluss (2.10) und eine zweite Flut (2.2) des Wärmeübertragers (2) einen zweiten Kältemittelanschluss (2.20) aufweist, wobei für die zweiflutige Durchströmung des Wärmeübertragers im AC-Betrieb der erste Kältemittelanschluss (2.10) ein Kältemitteleinlass (E_{AC}) und der zweite Kältemittelanschluss (2.20) ein Kältemittelauslass (A_{AC}) ist,
- zur einflutigen Durchströmung des Wärmeübertragers (2) im Wärmepumpen-Betrieb der erste und zweite Kältemittelanschluss (2.20) ein Kältemitteleinlass (E_{WP}) ist, und
- der Wärmeübertrager (2) wenigstens einen dritten Kältemittelanschluss (2.30) aufweist, welcher als Kältemittelauslass (A1_{WP}) im Wärmepumpenbetrieb mit der ersten Flut (2.1) kältemittelausgangsseitig und der zweiten Flut (2.2) kältemittelausgangsseitig fluidverbunden ist, **dadurch gekennzeichnet, dass**
- zur Steuerung der Strömung des Kältemittels vom zweiten Kältemittelanschluss (2.20) zum ersten Kältemittelanschluss (2.10) ein unidirektionales Ventilorgan (2.4) den zweiten Kältemittelanschluss (2.20) mit dem ersten Kältemittelanschluss (2.10) fluidverbindet,
- der dritte Kältemittelanschluss (2.30) mit einem Ventilorgan (2.5) zur Steuerung des aus dem Wärmeübertrager (2) austretenden Kältemittels fluidverbunden ist,
- der Wärmeübertrager (2) einen vierten Kältemittelanschluss (2.31) aufweist, welcher als zweiter Kältemittelauslass (A2_{WP}) im Wärmepumpenbetrieb neben dem dritten Kältemittelanschluss (2.30) als erster Kältemittelauslass (A1_{WP}) mit der ersten Flut (2.1) kältemittelausgangsseitig und der zweiten Flut (2.2) kältemittelausgangsseitig fluidverbunden ist, und
- der dritte und vierte Kältemittelanschluss (2.30, 2.31) mit dem Ventilorgan (2.5) zur Steuerung des aus dem Wärmeübertrager (2) austretenden Kältemittels fluidverbunden ist.

2. Kälteanlage (10) nach Anspruch 1,
**dadurch gekennzeichnet, dass** der Wärmeübertrager (2) zur Bildung der ersten und zweiten Flut (2.1, 2.2) asymmetrisch aufgeteilt ist.

3. Kälteanlage (10) nach Anspruch 1 oder 2,
**dadurch gekennzeichnet, dass** das unidirektionales Ventilorgan (2.4) als Rückschlagventil ausgebildet ist.

4. Kälteanlage (10) nach einem der vorhergehenden Ansprüche,
**dadurch gekennzeichnet, dass** das mit dem dritten Kältemittelanschluss (2.30) verbundene Ventilorgan (2.5) als Abschaltventil ausgebildet ist.

5. Wärmeübertrager (2) für eine Kälteanlage (10) nach einem der vorhergehenden Ansprüche, umfassend
- ein erstes Sammelrohr (2.01) und ein zweites Sammelrohr (2.02), welche beabstandet zueinander ausgerichtet sind,
- Wärmeübertragerrohre (2.100, 2.200) zur Herstellung einer Fluidverbindung zwischen den Sammelrohren (2.01, 2.02),
- ein in dem ersten Sammelrohr (2.01) angeordnetes Trennelement (2.010) zur Unterteilung der Wärmeübertragerrohre (2.100, 2.200) in eine erste und eine zweite Flut (2.1, 2.2), wobei das erste Sammelrohr (2.01) einen ersten Kältemittelanschluss (2.10) für die erste Flut (2.1) und einen zweiten Kältemittelanschluss (2.20) für die zweite Flut (2.2) aufweist, und
- einen mit dem zweiten Sammelrohr (2.02) verbundenen dritten Kältemittelanschluss (2.30),
**dadurch gekennzeichnet, dass**
- wenigstens ein vierter Kältemittelanschluss (2.31) mit dem zweiten Sammelrohr (2.02) verbunden ist.

6. Wärmeübertrager (2) nach Anspruch 5,
**dadurch gekennzeichnet, dass** ein Sammlerblock (2.6) in den Wärmeübertrager (2) derart integriert ist, dass dieser im Bereich des zweiten Sammelrohres (2.02) angeordnet ist.

7. Wärmeübertrager (2) nach einem der Ansprüche 5 oder 6,
**dadurch gekennzeichnet, dass** das unidirektionale Ventilorgan (2.4) im Wärmeübertrager (2) integriert ist, über welches der erste Kältemittelanschluss (2.10) mit dem zweiten Kältemittelanschluss (2.20) derart verbunden ist, dass eine Kältemittelströmung in Richtung des zweiten Kältemittelanschlusses (2.20) verhindert ist.

## Claims

1. Refrigeration system (10) for a vehicle comprising a refrigerant circuit (1) having a dual flow heat exchanger (2), wherein
- the dual flow heat exchanger (2) can be operated as a refrigerant condenser or gas cooler for an AC mode or as an air heat pump evaporator for a heat pump mode,
- a first flow (2.1) of the heat exchanger (2) has a first refrigerant connection (2.10) and a second flow (2.2) of the heat exchanger (2) has a second refrigerant connection (2.20), wherein for the dual flow through the heat exchanger in AC mode the first refrigerant connection (2.10) is a refrigerant inlet (E_{AC}) and the second refrigerant connection (2.20) is a refrigerant outlet (A_{AC}),
- for single flow through the heat exchanger (2) in heat pump mode the first and second refrigerant connections (2.20) are refrigerant inlets (E_{WP}), and
- the heat exchanger (2) has at least one third refrigerant connection (2.30) which as a refrigerant outlet (A1_{WP}) in heat pump mode is fluidically connected to the first flow (2.1) on the refrigerant outlet side and to the second flow (2.2) on the refrigerant outlet side,
**characterised in that**
- for controlling the flow of the refrigerant from the second refrigerant connection (2.20) to the first refrigerant connection (2.10) a unidirectional valve element (2.4) fluidically connects the second refrigerant connection (2.20) to the first refrigerant connection (2.10),
- the third refrigerant connection (2.30) is fluidically connected to a valve element (2.5) for controlling the refrigerant emerging from the heat exchanger (2),
- the heat exchanger (2) has a fourth refrigerant connection (2.31), which as a second refrigerant outlet (A2_{WP}) in heat pump mode in addition to the third refrigerant connection (2.30) is fluidically connected as the first refrigerant outlet (A1_{WP}) to the first flow (2.1) on the refrigerant outlet side and to the second flow (2.2) on the refrigerant outlet side, and
- the third and fourth refrigerant connections (2.30, 2.31) are fluidically connected to the valve element (2.5) for controlling the refrigerant emerging from the heat exchanger (2).

2. Refrigeration system (10) according to claim 1,
**characterised in that** the heat exchanger (2) is asymmetrically divided for forming the first and second flows (2.1, 2.2).

3. Refrigeration system (10) according to claim 1 or 2,
**characterised in that** the unidirectional valve element (2.4) is in the form of a check valve.

4. Refrigeration system (10) according to any of the preceding claims,
**characterised in that** the valve element (2.5) connected to the third refrigerant connection (2.30) is designed as a shut-off valve.

5. Heat exchanger (2) for a refrigeration system (10) according to any of the preceding claims, comprising
- a first manifold (2.01) and a second manifold (2.02), which are aligned spaced from one another,
- heat transfer pipes (2.100, 2.200) for creating a fluid connection between the manifolds (2.01, 2.02),
- a separating element (2.010) arranged in the first manifold (2.01) for dividing the heat transfer pipes (2.100, 2.200) into a first and a second flow (2.1, 2.2), wherein the first manifold (2.01) has a first refrigerant connection (2.10) for the first flow (2.1) and a second refrigerant connection (2.20) for the second flow (2.2), and
- a third refrigerant connection (2.30) connected to the second manifold (2.02),
**characterised in that**
- at least one fourth refrigerant connection (2.31) is connected to the second manifold (2.02).

6. Heat exchanger (2) according to claim 5,
**characterised in that** a collector block (2.6) is integrated into the heat exchanger (2) such that this is arranged in the region of the second manifold (2.02).

7. Heat exchanger (2) according to any of claims 5 or 6,
**characterised in that** the unidirectional valve element (2.4) is integrated in the heat exchanger (2), via which the first refrigerant connection (2.10) is connected to the second refrigerant connection (2.20) such that a refrigerant flow in the direction of the second refrigerant connection (2.20) is prevented.

## Revendications

1. Installation frigorifique (10) pour un véhicule avec un circuit de réfrigération (1) présentant un échangeur de chaleur (2) à deux flux, dans laquelle
- l'échangeur de chaleur (2) à deux flux peut fonctionner comme condenseur à réfrigérant ou refroidisseur à gaz pour un fonctionnement en CA ou comme évaporateur de pompe à chaleur à air pour un fonctionnement en pompe à chaleur,
- un premier flux (2.1) de l'échangeur de chaleur (2) présente un premier raccord à réfrigérant (2.10) et un second flux (2.2) de l'échangeur de chaleur (2) présente un deuxième raccord à réfrigérant (2.20), dans laquelle pour l'écoulement à deux flux de l'échangeur de chaleur dans le fonctionnement en CA le premier raccord à réfrigérant (2.10) est une entrée de réfrigérant (E_{AC}) et le deuxième raccord à réfrigérant (2.20) est une sortie de réfrigérant (A_{AC}),
- pour l'écoulement à un flux de l'échangeur de chaleur (2) dans le fonctionnement en pompe à chaleur les premier et deuxième raccord à réfrigérant (2.20) sont une entrée de réfrigérant (E_{WP}), et
- l'échangeur de chaleur (2) présente au moins un troisième raccord à réfrigérant (2.30) qui est relié en fluide comme sortie de réfrigérant (A1_{WP}) dans le fonctionnement en pompe à chaleur au premier flux (2.1) côté sortie de réfrigérant et au second flux (2.2) côté sortie de réfrigérant,
**caractérisée en ce que**
- pour la commande de l'écoulement du réfrigérant du deuxième raccord à réfrigérant (2.20) au premier raccord à réfrigérant (2.10) un organe de soupape (2.4) unidirectionnel relie en fluide le deuxième raccord à réfrigérant (2.20) au premier raccord à réfrigérant (2.10),
- le troisième raccord à réfrigérant (2.30) est relié en fluide à un organe de soupape (2.5) pour la commande du réfrigérant sortant de l'échangeur de chaleur (2),
- l'échangeur de chaleur (2) présente un quatrième raccord à réfrigérant (2.31) qui est relié en fluide comme seconde sortie de réfrigérant (A2_{WP}) dans le fonctionnement en pompe à chaleur à côté du troisième raccord à réfrigérant (2.30) comme première sortie de réfrigérant (A1_{WP}) au premier flux (2.1) côté sortie de réfrigérant et au second flux (2.2) côté sortie de réfrigérant, et
- les troisième et quatrième raccord à réfrigérant (2.30, 2.31) sont reliés en fluide à l'organe de soupape (2.5) pour la commande du réfrigérant sortant de l'échangeur de chaleur (2).

2. Installation frigorifique (10) selon la revendication 1,
**caractérisée en ce que** l'échangeur de chaleur (2) est divisé de manière asymétrique pour la formation des premier et second flux (2.1, 2.2).

3. Installation frigorifique (10) selon la revendication 1 ou 2,
**caractérisée en ce que** l'organe de soupape (2.4) unidirectionnel est réalisé comme clapet antiretour.

4. Installation frigorifique (10) selon l'une quelconque des revendications précédentes,
**caractérisée en ce que** l'organe de soupape (2.5) relié au troisième raccord à réfrigérant (2.30) est réalisé comme soupape d'arrêt.

5. Échangeur de chaleur (2) pour une installation frigorifique (10) selon l'une quelconque des revendications précédentes, comprenant
- un premier tube collecteur (2.01) et un second tube collecteur (2.02) qui sont orientés à distance l'un de l'autre,
- des tubes d'échangeur de chaleur (2.100, 2.200) pour l'établissement d'une liaison de fluide entre les tubes collecteurs (2.01, 2.02),
- un élément de séparation (2.010) agencé dans le premier tube collecteur (2.01) pour la subdivision des tubes d'échangeur de chaleur (2.100, 2.200) en un premier et un second flux (2.1, 2.2), dans lequel le premier tube collecteur (2.01) présente un premier raccord à réfrigérant (2.10) pour le premier flux (2.1) et un deuxième raccord à réfrigérant (2.20) pour le second flux (2.2), et
- un troisième raccord à réfrigérant (2.30) relié au second tube collecteur (2.02),
**caractérisé en ce que**
- au moins un quatrième raccord à réfrigérant (2.31) est relié au second tube collecteur (2.02).

6. Échangeur de chaleur (2) selon la revendication 5,
**caractérisé en ce qu'**un bloc collecteur (2.6) est intégré dans l'échangeur de chaleur (2) de telle manière que celui-ci soit agencé dans la zone du second tube collecteur (2.02).

7. Échangeur de chaleur (2) selon l'une quelconque des revendications 5 ou 6,
**caractérisé en ce que** l'organe de soupape (2.4) unidirectionnel est intégré dans l'échangeur de chaleur (2), par le biais duquel le premier raccord à réfrigérant (2.10) est relié au deuxième raccord à réfrigérant (2.20) de telle manière qu'un écoulement de réfrigérant en direction du deuxième raccord à réfrigérant (2.20) soit empêché.
